# EUROPEAN PATENT SPECIFICATION

(11) **EP 4 245 418 B1**
(45) Date of publication and mention of the grant of the patent: **26.02.2025**
(21) Application number: 22161875.4
(22) Date of filing: 14.03.2022
(51) Int. Cl.: B25B 5/14, B02C 2/00, B23P 19/06, B25B 5/06, B25B 13/50, B02C 23/00

(54) **RETAINING MECHANISM AND TOOL FOR MOUNTING AND DISMOUNTING A CRUSHER**
HALTEVORRICHTUNG UND WERKZEUG ZUM MONTIEREN UND DEMONTIEREN EINES BRECHERS
MÉCANISME DE RETENUE ET OUTIL DE MONTAGE ET DE DÉMONTAGE D'UN BROYEUR

(43) Date of publication of application: 20.09.2023
(73) Proprietor: Sandvik SRP AB, 233 81 Svedala (SE)
(72) Inventor: LARSSON, Kristofer, 23381 Svedala (SE); GUNNARSSON, Johan, 23381 Svedala (SE)
(74) Representative: Sandvik

(56) References cited:
- EP-A1- 2 929 940
- WO-A1-2015/155205
- CN-A- 112 404 760
- CN-U- 210 232 831
- DE-B- 1 283 654
- GB-A- 550 540
- US-A- 5 172 613

## Description

### Field of invention

The present invention relates to a tool for securily mount and dismount a joint for an inner crushing shell on a main shaft mounted crushing head of a gyratory crusher, a retainer assembly and a method for fastening a retainer assembly with the tool.

### Background

Gyratory crushers are used for crushing ore, mineral and rock material to smaller sizes. Typically, the crusher comprises a crushing head mounted upon an elongate main shaft. A first crushing shell (typically referred to as a mantle) is mounted on the crushing head and a second crushing shell (typically referred to as a concave) is mounted on a frame such that the first and second crushing shells define together a crushing chamber through which the material to be crushed is passed. A driving device positioned at a lower region of the main shaft is configured to rotate an eccentric assembly positioned about the shaft, so as to cause the crushing head to perform a gyratory pendulum movement and crush the material introduced in the crushing chamber.

The inner crushing shell and the outer crushing shell become worn and require replacement at regular intervals. A variety of different assemblies have been proposed for mounting the inner crushing shell at the main shaft in an attempt to both provide a reliable lock and convenient mounting and dismounting of the mantle, this is typically referred to as a head nut. Conventional arrangements are still disadvantageous as it is typically required to use a sledge hammer or a hydraulic hammer for both tightening and loosening. It is therefore important to provide a reliable retaining mechanism being able to stand the crushing forces as well as safely mount and dismount the retaining mechanism at the crusher frame and the crushing head. By using a hammer the threads of the retaining mechanism normally gets damaged due to tilting or due to excessive forces being used, which leads to extra costs since components get broken. It is a dangerous work leading to personal often getting injured. From document GB550540 A there is known a crushing mantle assembly comprising a mantle having a flange for relieving the thrust or expansion of the metal of the mantle caused to flow by the crushing impacts during operation. A known retainer assembly to releasably secure a mantle at a head centre of a gyratory crusher is described in EP 2929940 A1. WO2015/155205 A1 relates to a known a method and device for mounting a crushing cone on the cone carrier of a cone crusher. A known method for assembling lining plates of a multi-cylinder cone crusher is disclosed in CN112404 760 A. In DE1283654 B there is disclosed a rotary crusher, the crushing cone of which is provided with a crushing cone chuck, which is clamped against the conical surface of the crushing cone via a nut screwed onto the crushing cone pin. Installed between the crushing cone pin and the clamping nut is a threaded ring which is detachably connected to the crushing cone pin and a hydraulic pressure device acting between the threaded ring and the crushing cone chuck.

There is a need to not damage the threads and to not use excessive forces when mounting and dismantling the crusher as when hammering using a sledge hammer or a rammer bar. Further, there is a need for the personal to be able to safely mount and dismount the crusher.

Thus, what is required is a retainer assembly and a tool for mounting and dismounting the shells at the crusher that addresses the above problems.

### Summary

It is an object of the present invention to provide a tool that in a secure manner for personal is used to tighten and secure a retainer assembly at a crusher, while the tool also is used to securely loosen and remove the retainer assembly from the crusher. Further there is an objective to rely on a tool working in equilibrium when applying force for tightening/loosening such that there is no risk of the head nut tilting. This also leads to prolonged lifetime of the head nut, such that there will be less costs due to fewer times that replacement is needed.

The objectives are achieved by providing a tool for a retainer assembly with a two-point tightening by actuators that are able to apply a predefined force when mounting and dismounting.

According to a first aspect of the present invention there is provided a tool for a retainer assembly of a gyratory crusher, the tool being intended to be arranged around a shaft of the crusher on top of a retainer assembly securing a crushing shell, and wherein the tool is characterized by comprising: a first plate being arranged on top of a second plate and wherein the plates being able to rotate in relation to each other, and wherein the plates comprising a centered through hole coinciding with each other; the first plate having a smaller outer periphery than the second plate; a first and a second actuator mounted on the second plate at the periphery on opposite sides; a first and a second lever arm mounted on the first plate and mounted in connection to the first and the second actuator, respectively, and wherein the lever arms comprising gripping surfaces intended to be arranged around the shaft; a first and a second movable spigot mounted on the first plate in connection to the first and the second lever arm, respectively; and pins mounted on the lower side of the second plate in order for the tool being adapted to fit with the retainer assembly. This is a robust tool that makes the personal being able to use it for mounting/dismounting the retainer assembly in a safe way.

Preferably the tool comprising blocks mounted on the lower side of the second plate, evenly distributed on a circle, and to which blocks the pins being mounted. This achieves the required spacing axially for fitting of the pins.

Optionally the tool comprising two pins mounted on two different blocks, respectively. This gives a good balance when mounting the tool.

Optionally the two pins being mounted on two oppositely arranged blocks, respectively. This gives an appropriate distance between the pins so they are connected to the assembly in order to achieve a good anchoring of the pins.

Preferably the tool comprising four pins mounted on four blocks, respectively. Thereby a very firm connection to the retainer assembly is achieved.

Preferably the gripping surfaces of the lever arms comprising flexible cushions and the number of cushions being at least one. This gives good support and a good grip against the shaft with adequate friction.

Preferably the gripping surfaces of the lever arms comprising flexible cushions and the number of cushions being six on each lever arm. This is advantageous in order for the tool to have an optimal grip around the shaft.

According to a second aspect of the present invention there is provided a retainer assembly for securing a crushing shell to a crusher, by means of using the tool according to the first aspect of the present invention, wherein the retainer assembly being adapted for engagement with the tool to be secured to and/or removed from the crusher and comprising: a head nut having a first surface to be radially inward facing towards the shaft of the crusher and a second surface to be radially outward facing towards an axial upper region of the shell; a support ring arranged between the head nut and the shaft; wherein the head nut comprising holes on a top side, the holes being arranged and adapted to fit with the pins on the lower side of the second plate of the tool.

Optionally the holes being evenly distributed around the perimeter of the top side of the head nut. In order to have even distribution of the connection and transmittal of forces when the tool is active.

Preferably the holes being formed in protrusions protruding in radial direction of the head nut and wherein each protrusion comprising one hole. This gives the retainer assembly a slim design.

Optionally the number of holes being four. Thereby a balanced connection with the tool is achieved.

Preferably the retainer assembly comprising a wear plate securely arranged adjacent on top of the head nut. This gives good protection of the crusher such that the retainer assembly is not prone to wear.

Optionally the wear plate being securely arranged onto the head nut by means of threaded joints, and wherein the wear plate further comprising conical nuts arranged on top of the joints and flush with the upper side of the wear plate. Thereby the joints are covered and do not get damaged.

According to a third aspect of the present invention there is provided a method for using a tool according to a first aspect of the present invention, in order to fasten a retainer assembly at a gyratory crushing shell, wherein the method comprising the following steps: arranging the tool around the shaft of the crusher on top of the retainer assembly, with the pins mounted on the lower side of the tool fitting into the retainer assembly holes and with the gripping surfaces of the lever arms arranged around the shaft; mounting the first and second spigot on the first plate in connection to the first and the second lever arm, respectively, wherein the spigot is mounted on the side of the lever arm facing away from the actuator; retracting initially first and a second actuator, wherein the second plate being rotated; retracting continously until full retraction of first and second actuator, wherein the first plate being rotated; and reaching maximum capacity of actuators, wherein the retainer assembly being fastened. This is a secure method of tightly fastening the retainer assembly.

Optionally the method comprising the following further steps: removing the tool; arranging the wear plate around the shaft of the crusher on top of the retainer assembly; and securely arranging the wear plate to the retainer assembly.

### Brief description of drawings

A specific implementation of the present invention will now be described by way of example only and with reference to the following drawings in which:
Figure 1 is a perspective view of a gyratory crusher mantle having a tool mounted in connection to a retainer assembly for securing an inner crushing shell on a shaft mounted head of a gyratory crusher;
Figure 2a is a first embodiment and figure 2b is a second embodiment in a perspective view of the tool and the retainer assembly mounted on the mantle of figure 1 seen from below;
Figure 3a is a top view and figure 3b is a perspective view of the tool mounted around the shaft of a gyratory crusher before tightening of the retainer assembly;
Figure 4a is a top view and figure 4b is a perspective view of the tool mounted around the shaft of a gyratory crusher at start of tightening of the retainer assembly;
Figure 5a is a top view and figure 5b is a perspective view of the tool mounted around the shaft of a gyratory crusher when the tool is taking new grip after full retraction of cylinders;
Figure 6a is a top view and figure 6b is a perspective view of the tool mounted around the shaft of a gyratory crusher showing the tool taking a new grip in a tightening sequence of the retainer assembly;
Figure 7 is a magnified perspective view of the tool mounted around the shaft of a gyratory crusher before loosening of the retainer assembly;
Figure 8 is a cross-sectional perspective view of the tool mounted around the shaft and on top of the mantle;
Figure 9 is a side view after tightening of the retainer assembly, with the tool removed and a wear plate arranged around the shaft;
Figure 10 is a cross-sectional perspective view of the wear plate and the retainer assembly (head nut).

### Detailed description

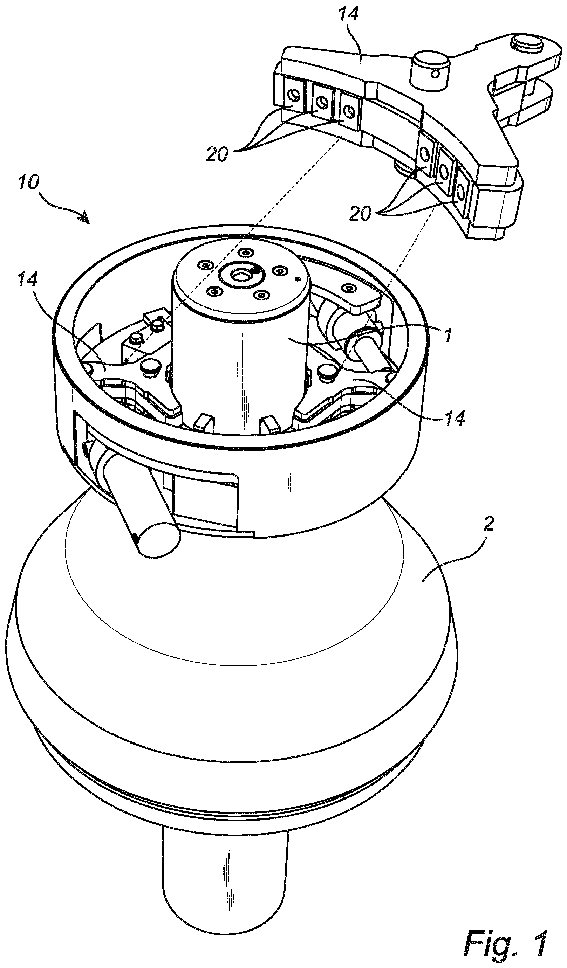

Figure 1 discloses a gyratory crusher mantel having a tool 10 mounted in connection to a retainer assembly for securing an inner crushing shell 2 on a vertical shaft 1 of a gyratory crusher. The retainer assembly aims to secure an inner crushing shell 2 on a conical shaped head that is arranged on a vertical shaft 1. The shaft is rotatably driven by suitable drives and gears (not shown) to precess within the crusher to displace the inner crushing shell 2 radially relative to an outer crushing shell (not shown). The retainer assembly need to be approriate both for attachment and detachment of the crusher, and also be able to resist loading forces transmitted through the crusher and the retainer assembly during use.

The tool 10 comprises two lever arms 14 arranged on opposite sides of the shaft 1. The lever arms have gripping surfaces comprising cushions 20 being arranged on a bow shaped part of the lever arm in order to achieve a slim and firm fit around the shaft. The cushions are arranged on a part of the lever arm having the shape of a segment of a ring. The number of cushions being disclosed is a total of six, with three on each end of the segment. The number of cushions could also be a total of four, with two on each end of the segment, or a total of two, with one on each end of the segment. Possibly the number of cushions could also be higher such as a total of eight, with four on each end of the segment, or even a higher number. A further alternative embodiment is to have as gripping surface one large cushion covering the segment from one end to the other on the side facing towards the shaft. The gripping surfaces are made of rubber or any other type of flexible material.

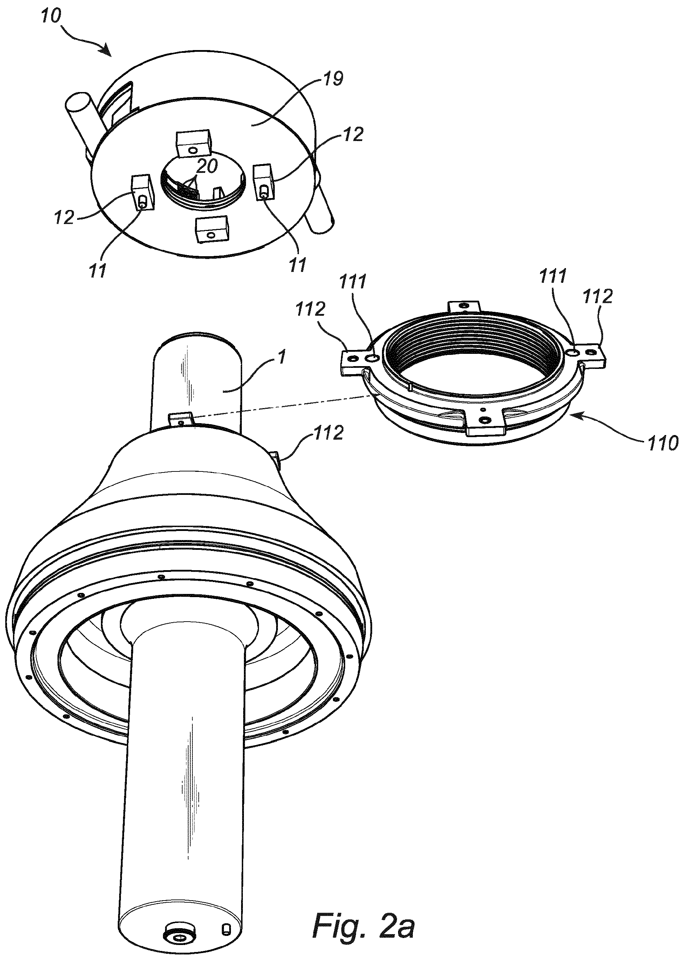

Figure 2a discloses a first embodiment of the tool 10 and the head nut 110 of the retainer assembly mounted on the shell around the shaft 1 seen in a perspective view from below. On the lower side 19 of the tool 10 blocks 12 are mounted on an imaginary circle. The number of blocks can be two or four or more. Alternatively it could also be one single continuous circular block. Two pins 11 are mounted oppositely to each other on the blocks. The pins 11 fit into holes 111 located in the head nut 110 at protrusions 112. The protrusions are radially extensions, preferably four evenly distributed around the perimeter.

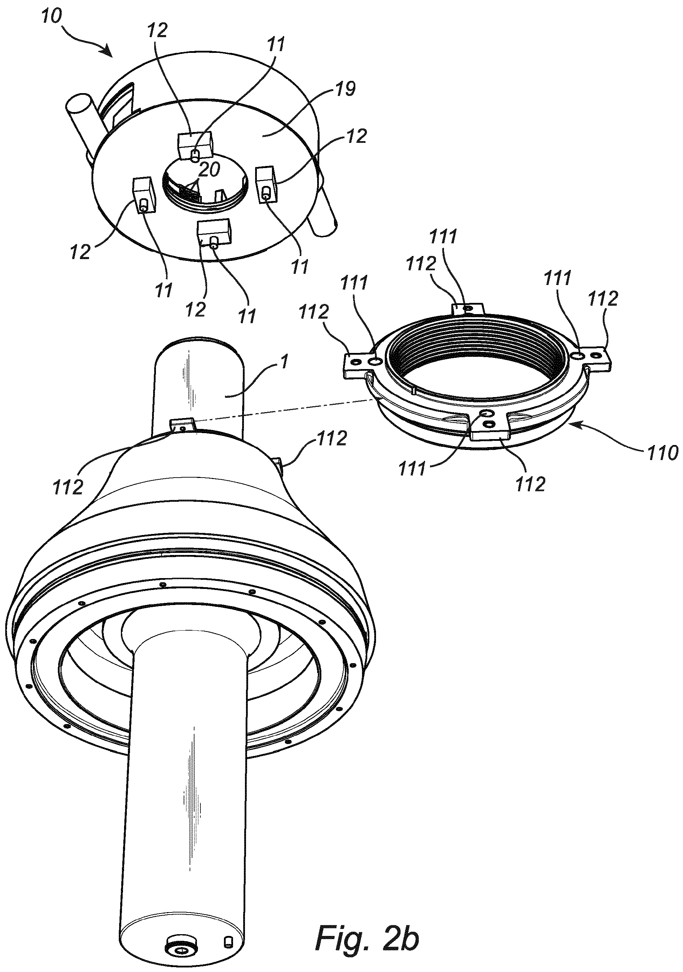

Figure 2b discloses a second embodiment of the tool 10 and the head nut 110 of the retainer assembly mounted on the shell seen in a perspective view from below. In this embodiment the number of pins 11 mounted on blocks 12 is four. They are evenly distributed around the imaginary circle in order to fit into holes 111 of the head nut 110. Also in this embodiment the number of blocks could be just one continuous circular ringshaped block to which the four pins are mounted. The number of pins 11 can be two, three, four or even more.

The blocks 12 as shown in the figures are rectangular such that the longitudinal direction of two of the blocks are parallel to the longitudinal direction of the first and second actuator 13, respectively and the other two blocks 12 have a longitudinal direction being transversal to the longitudinal direction of the actuators. The blocks can be of any other shape than rectangular.

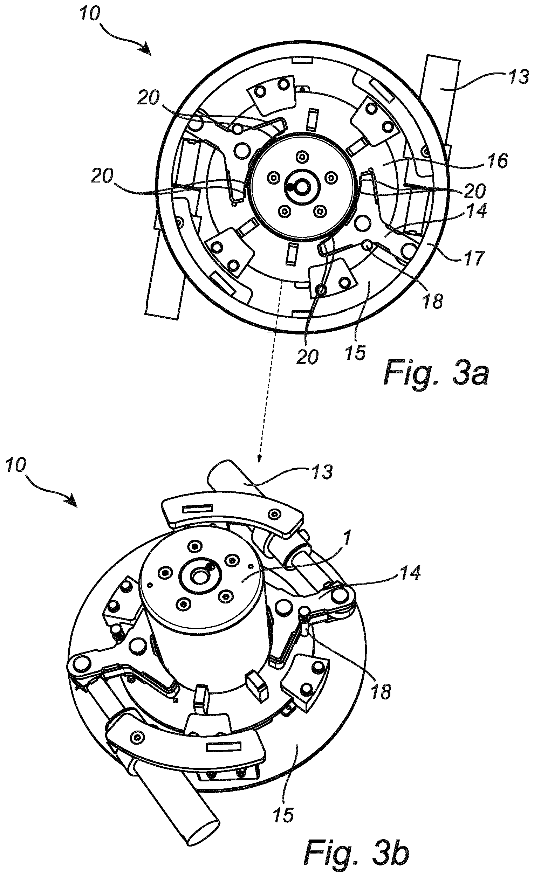

Figure 3a and 3b disclose the tool 10 mounted around the shaft 1 of a gyratory crusher before tightening of the retainer assembly. Figure 3a is a view of the tool seen from above. The tool 10 as disclosed in the figures has the shape of a truncated cylinder with an outer anullar edge 17 having a specific height and a lower outer circular plate 15 having an outer perimeter coinciding with the perimeter of the annular edge 17 and being connected to each other. The tool 10 can also have a different outer shape than circular, such as a hexagon or an octagon. The lower plate 15 comprises a centered through hole that is to be arranged around the shaft 1 of the crusher. An upper inner circular plate 16 has an outer perimeter being smaller than the lower circular plate 15, and wherein the upper plate 16 comprises a centered through hole coinciding with the centered through hole of the lower plate 15. Further the tool comprises a first and a second hydraulic actuator 13 mounted on the lower outer plate 15 at the periphery on opposite sides, such that the actuators (cylinders) are arranged to move in through holes of the annular edge 17. The actuators can be electrically or hydraulically actuated. The number of actuators, lever arms and spigots can also be higher than two.

The first and a second lever arm 14 having a shape similar to a combination of the shape of the letters T and Y, such that the single leg being the base (lower part) of T/Y is rotatably connected to the first and the second actuator 13, respectively. The opposite end of the lever arm 14 branching out into two legs (the bow shaped part comprising the cushions 20) are to be arranged around the shaft 1 such that the two legs compose a segment of a circle. The part of the lever arms 14 comprising the two legs (upper part of T/Y) is rotatably connected to the upper inner plate 16.

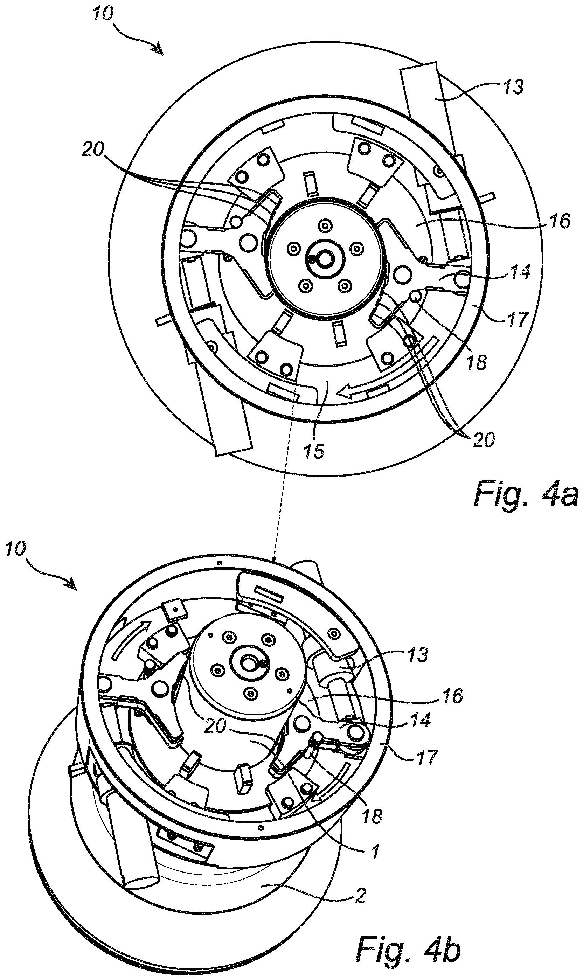

Figure 4a and 4b disclose the tool 10 mounted around the shaft 1 of a gyratory crusher when tightening of the retainer assembly begins. Figure 4a is a view of the tool seen from above. The lever arms 14 will move when the actuators 13 are moving. The actuators 13 are fixedly arranged to the wall of the tool, at the annular edge 17. So, when retracting the actuators 13 the outer plate 15 will move in the clockwise direction, as indicated by the arrow. The first and the second spigot 18 are mounted in connection to the first and the second lever arms 14, respectively, on the side of the lever arm facing away from the actuator 13. At this sequence of tightening of the head nut the bow shaped part of the lever arms being closest to the actuator will make contact with the shaft.

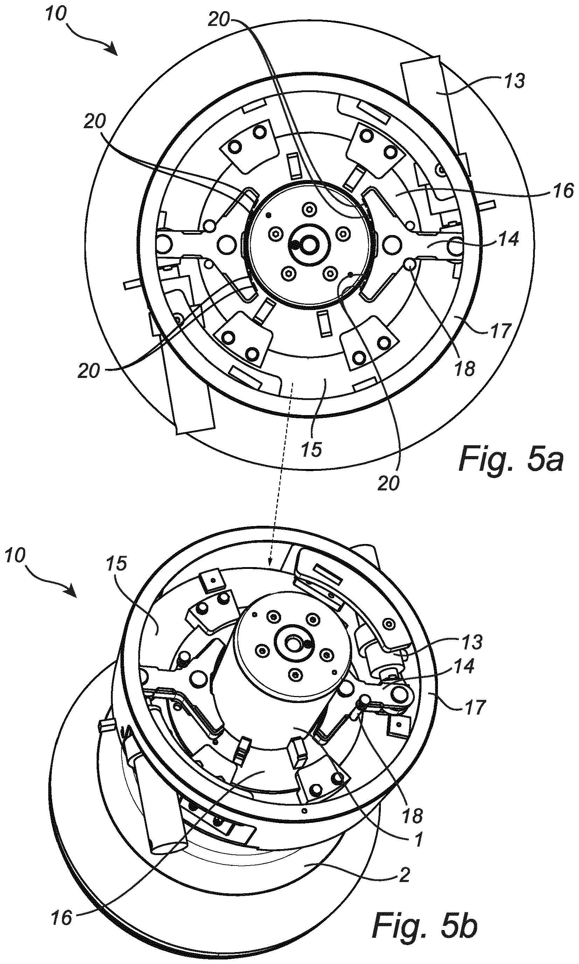

Figure 5a and 5b disclose the tool 10 mounted around the shaft 1 of a gyratory crusher when the tool is taking new grip after full retraction of actuators. The clamping force at the shaft being loosened when the cylinders are compressed.

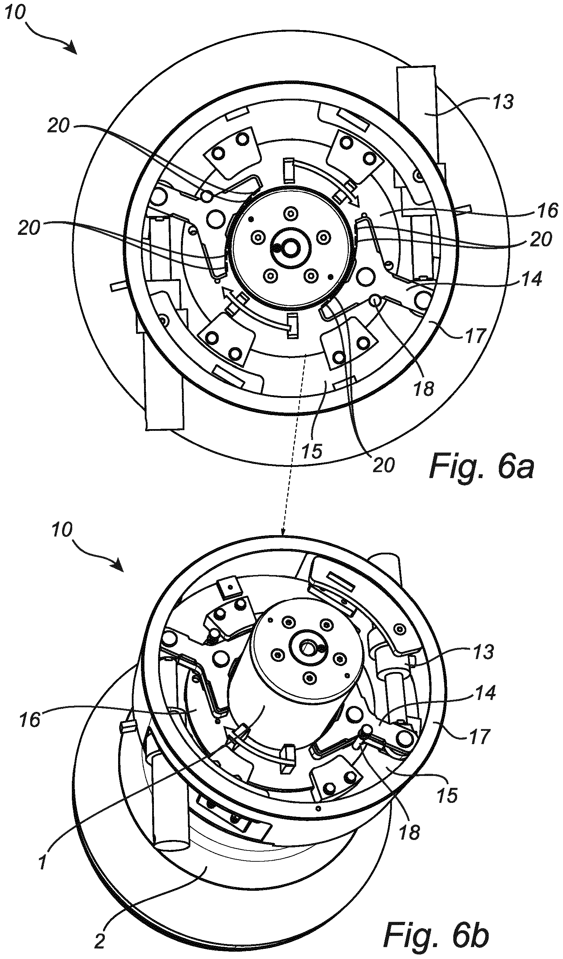

Figure 6a and 6b disclose the tool 10 mounted around the shaft 1 of a gyratory crusher when the tool is taking a new grip in a tightening sequence of the retainer assembly. At this sequence of tightening retraction of the actuators will make the lever arms 14 put pressure on the spigots 18 and the inner plate 16 rotating in clockwise direction, as indicated by the arrows. The actuators 13 will be extending in order for the gripping surfaces of the lever arms 14 to take a new grip. The retracting and extending of the actuators will be repeated until the retainer assembly is fastened.

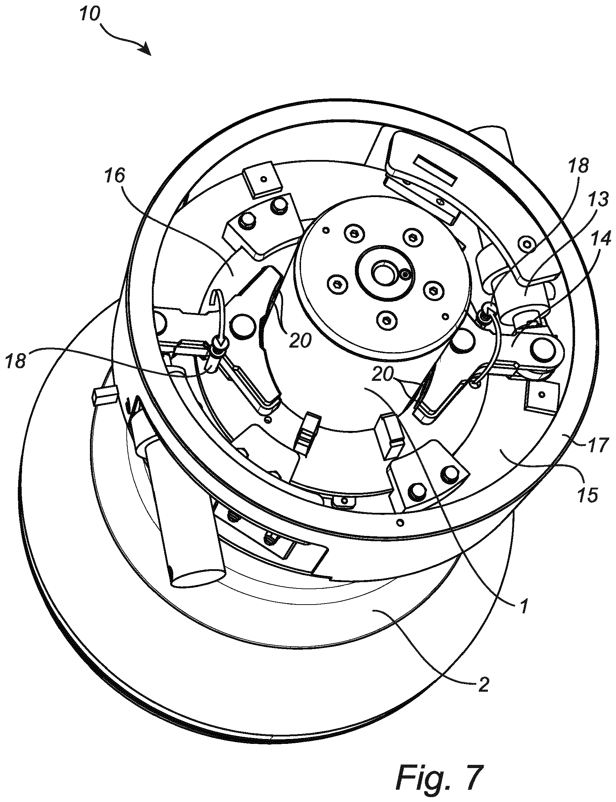

Figure 7 discloses the tool 10 mounted around the shaft 1 of a gyratory crusher before loosening of the retainer assembly. The spigots 18 are moved to the same side of the lever arms 14 as the actuators 13. The loosening of the retainer assembly can then start by using the extending direction of the actuators (cylinders). The spigots can be any kind of stopping element such as a hook, arm or a pin.

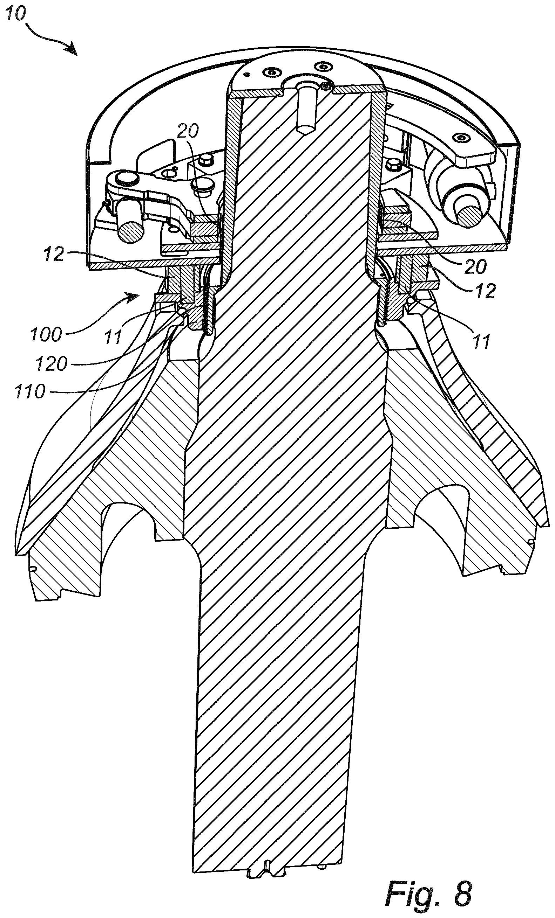

Figure 8 discloses the tool 10 mounted around the shaft 1 on top of the shell. The blocks 12 are resting against the retainer assembly 100. The retainer assembly 100 comprising a support ring 120 and a head nut 110. The support ring 120 being arranged between the head nut 110 and the shaft 1. The pins 11 of the tool are arranged in the holes (111) of the head nut.

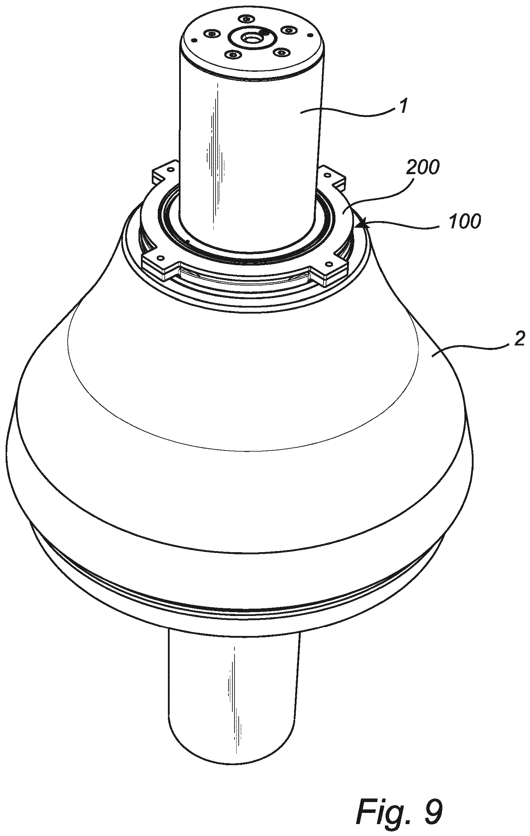

Figure 9 discloses the retainer assembly 100 after tigthening, so the tool 10 having been removed. A wear plate 200 is arranged on top of the retainer assembly 100 around the shaft 1 on top of the shell 2.

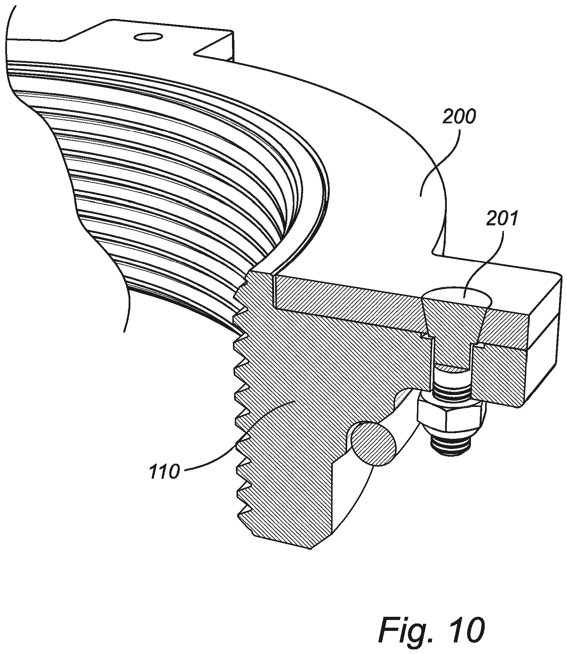

Figure 10 discloses the wear plate 200 and the head nut 110. The wear plate 200 is securely arranged onto the head nut 110 by means of threaded joints. Conical nuts 201 are arranged on top of the joints and flush with the upper side of the wear plate 200. The conical nuts serve to protect the joints.

## Claims

1. A tool (10) for a retainer assembly (100) of a gyratory crusher, the tool (10) being intended to be arranged around a shaft (1) of the crusher on top of a retainer assembly (100) securing a crushing shell (2), **characterzed in that** the tool (10) comprising:
a first plate (16) being arranged on top of a second plate (15) and wherein the plates being able to rotate in relation to each other, and wherein the plates (16, 15) comprising a centered through hole coinciding with each other;
the first plate (16) having a smaller outer periphery than the second plate (15);
a first and a second actuator (13) mounted on the second plate (15) at the periphery on opposite sides;
a first and a second lever arm (14) mounted on the first plate (16) and mounted in connection to the first and the second actuator (13), respectively, and wherein the lever arms (14) comprising gripping surfaces intended to be arranged around the shaft (1);
a first and a second movable spigot (18) mounted on the first plate (16) in connection to the first and the second lever arm (14), respectively; and
pins (11) mounted on the lower side (19) of the second plate (15) in order for the tool (10) being adapted to fit with the retainer assembly (100).

2. The tool (10) as claimed in claim 1, wherein the tool comprising blocks (12) mounted on the lower side (19) of the second plate (15), evenly distributed on a circle, and to which blocks (12) the pins (11) being mounted.

3. The tool (10) as claimed in claim 1 or 2, wherein the tool comprising two pins (11) mounted on two different blocks (12), respectively.

4. The tool (10) as claimed in claim 3, wherein the two pins (11) being mounted on two oppositely arranged blocks (12), respectively.

5. The tool (10) as claimed in claim 1 or 2, wherein the tool comprising four pins (11) mounted on four blocks (12), respectively.

6. The tool (10) as claimed in any preceding claim, wherein the gripping surfaces of the lever arms (14) comprising flexible cushions (20) and the number of cushions per lever arm being at least one.

7. The tool (10) as claimed in any preceding claim, wherein the gripping surfaces of the lever arms (14) comprising flexible cushions (20) and the number of cushions being six on each lever arm (14).

8. A retainer assembly (100) for securing a crushing shell (2) to a crusher, wherein the retainer assembly (100) comprising:
a head nut (110) having a first surface to be radially inward facing towards the shaft (1) of the crusher and a second surface to be radially outward facing towards an axial upper region of the shell (2);
a support ring (120) arranged between the head nut (110) and the shaft (1);
wherein the head nut (110) comprising holes (111) on a top side,
**characterized in that** the retainer assembly (100) being adapted for engagement with the tool (10) as claimed in any preceding claim to be secured to and/or removed from the crusher, **in that** the holes being arranged and adapted to fit with the pins (11) on the lower side (19) of the second plate (15) of the tool (10).

9. The retainer assembly (100) as claimed in claim 8, wherein the holes (111) being evenly distributed around the perimeter of the top side of the head nut (110).

10. The retainer assembly (100) as claimed in any of claims 8 or 9, wherein the holes (111) being formed in protrusions (112) protruding in radial direction of the head nut (110) and wherein each protrusion (112) comprising one hole (111).

11. The retainer assembly (100) as claimed in any of claims 8 to 10, wherein the number of holes (111) being four.

12. The retainer assembly (100) as claimed in any of claims 8 to 11, wherein the retainer assembly (100) comprising a wear plate (200) securely arranged adjacent on top of the head nut (110).

13. The retainer assembly (100) as claimed in claim 12, wherein the wear plate (200) being securely arranged onto the head nut (110) by means of threaded joints, and wherein the wear plate (200) further comprising conical nuts (201) arranged on top of the joints and flush with the upper side of the wear plate (200).

14. A method for using a tool (10) according to any of claims 1-7, in order to fasten a retainer assembly (100) according to any of claims 8-13 to a gyratory crushing shell (2) **characterized in that** the method comprising the following steps:
arranging the tool (10) around the shaft (1) of the crusher on top of the retainer assembly (100), with the pins (11) mounted on the lower side of the tool (10) fitting into the retainer assembly holes (111) and with the gripping surfaces of the lever arms (14) arranged around the shaft (1);
mounting the first and second spigot (18) on the first plate (16) in connection to the first and the second lever arm (14), respectively, wherein the spigot is mounted on the side of the lever arm (14) facing away from the actuator (13);
retracting initially first and a second actuator (13), wherein the second plate (15) being rotated;
retracting continously until full retraction of first and second actuator (13), wherein the first plate (16) being rotated; and
reaching maximum capacity of actuators, wherein the retainer assembly (100) being fastened.

15. The method according to claim 14, wherein the method comprising the following steps:
removing the tool (10);
arranging the wear plate (200) around the shaft (1) of the crusher on top of the retainer assembly (100); and
securely arranging the wear plate (200) to the retainer assembly (100).

## Patentansprüche

1. Werkzeug (10) für eine Halteanordnung (100) eines Kreiselbrechers, wobei das Werkzeug (10) dazu vorgesehen ist, um eine Welle (1) des Brechers herum über einer Halteanordnung (100) angeordnet zu werden, welche eine Brechschale (2) sichert, **dadurch gekennzeichnet, dass** das Werkzeug (10) umfasst:
eine erste Platte (16), welche über einer zweiten Platte (15) angeordnet ist, und wobei die Platten in der Lage sind, sich relativ zueinander zu drehen, und wobei die Platten (16, 15) ein zentriertes Durchgangsloch umfassen, welche miteinander zusammenfallen;
wobei die erste Platte (16) einen kleineren Außenumfang als die zweite Platte (15) aufweist;
eine erste und eine zweite Betätigungsvorrichtung (13), welche an der zweiten Platte (15) am Umfang auf gegenüberliegenden Seiten montiert sind;
einen ersten und einen zweiten Hebelarm (14), welche auf der ersten Platte (16) montiert und in Verbindung mit der ersten bzw. der zweiten Betätigungsvorrichtung (13) montiert sind, und wobei die Hebelarme (14) Griffflächen umfassen, welche dazu vorgesehen sind, um die Welle (1) herum angeordnet zu werden;
einen ersten und einen zweiten beweglichen Zapfen (18), welche auf der ersten Platte (16) in Verbindung mit dem ersten bzw. dem zweiten Hebelarm (14) montiert sind; und
Stifte (11), welche an der Unterseite (19) der zweiten Platte (15) montiert sind, damit das Werkzeug (10) dazu adaptiert wird, an die Halteanordnung (100) angepasst zu werden.

2. Werkzeug (10) nach Anspruch 1, wobei das Werkzeug Blöcke (12) umfasst, welche auf der Unterseite (19) der zweiten Platte (15), gleichmäßig auf einem Kreis verteilt, montiert sind, und wobei an den Blöcken (12) die Stifte (11) montiert sind.

3. Werkzeug (10) nach Anspruch 1 oder 2, wobei das Werkzeug zwei Stifte (11) umfasst, welche jeweils auf zwei verschiedenen Blöcken (12) montiert sind.

4. Werkzeug (10) nach Anspruch 3, wobei die beiden Stifte (11) jeweils auf zwei gegenüberliegend angeordneten Blöcken (12) montiert sind.

5. Werkzeug (10) nach Anspruch 1 oder 2, wobei das Werkzeug vier Stifte (11) umfasst, welche jeweils auf vier Blöcken (12) montiert sind.

6. Werkzeug (10) nach einem vorstehenden Anspruch, wobei die Griffflächen der Hebelarme (14) flexible Polster (20) umfassen und die Anzahl der Polster pro Hebelarm zumindest eins beträgt.

7. Werkzeug (10) nach einem vorstehenden Anspruch, wobei die Griffflächen der Hebelarme (14) flexible Polster (20) umfassen und die Anzahl der Polster auf jedem Hebelarm (14) sechs beträgt.

8. Halteanordnung (100) zum Sichern einer Brechschale (2) an einem Brecher, wobei die Halteanordnung (100) umfasst:
eine Kopfmutter (110) mit einer ersten Oberfläche, welche radial nach innen in Richtung der Welle (1) des Brechers weisen soll, und einer zweiten Oberfläche, welche radial nach außen in Richtung eines axial oberen Bereichs der Schale (2) weisen soll;
einen zwischen der Kopfmutter (110) und der Welle (1) angeordneten Stützring (120);
wobei die Kopfmutter (110) auf einer Oberseite Löcher (111) umfasst,
**dadurch gekennzeichnet, dass** die Halteanordnung (100) für Eingriff mit dem Werkzeug (10) nach einem vorstehenden Anspruch adaptiert ist, um an dem Brecher befestigt zu werden und/oder aus dem Brecher entfernt zu werden, indem die Löcher so angeordnet und adaptiert sind, dass sie zu den Stiften (11) auf der Unterseite (19) der zweiten Platte (15) des Werkzeugs (10) passen.

9. Halteanordnung (100) nach Anspruch 8, wobei die Löcher (111) gleichmäßig um den Umfang der Oberseite der Kopfmutter (110) verteilt sind.

10. Halteanordnung (100) nach einem der Ansprüche 8 oder 9, wobei die Löcher (111) in Vorsprüngen (112) ausgebildet sind, welche in radialer Richtung der Kopfmutter (110) hervorstehen, und wobei jeder Vorsprung (112) ein Loch (111) umfasst.

11. Halteanordnung (100) nach einem der Ansprüche 8 bis 10, wobei die Anzahl der Löcher (111) vier beträgt.

12. Halteanordnung (100) nach einem der Ansprüche 8 bis 11, wobei die Halteanordnung (100) ein Verschleißblech (200) umfasst, welches sicher angrenzend über der Kopfmutter (110) angeordnet ist.

13. Halteanordnung (100) nach Anspruch 12, wobei das Verschleißblech (200) mittels Verschraubungen sicher auf der Kopfmutter (110) angeordnet ist, und wobei das Verschleißblech (200) weiter konische Muttern (201) umfasst, welche über den Verbindungen und bündig mit der Oberseite des Verschleißblechs (200) angeordnet sind.

14. Verfahren zur Verwendung eines Werkzeugs (10) nach einem der Ansprüche 1-7, um eine Halteanordnung (100) nach einem der Ansprüche 8-13 an einer Kreiselbrechschale (2) zu befestigen, **dadurch gekennzeichnet, dass** das Verfahren die folgenden Schritte umfasst:
Anordnen des Werkzeugs (10) um die Welle (1) des Brechers über der Halteanordnung (100) herum, wobei die an der Unterseite des Werkzeugs (10) montierten Stifte (11) in die Löcher (111) der Halteanordnung passen und die Griffflächen der Hebelarme (14) um die Welle (1) herum angeordnet sind;
Montieren des ersten und zweiten Zapfens (18) auf der ersten Platte (16) in Verbindung mit dem ersten bzw. zweiten Hebelarm (14), wobei der Zapfen auf der von der Betätigungsvorrichtung (13) abgewandten Seite des Hebelarms (14) montiert ist;
Einziehen zunächst einer ersten und einer zweiten Betätigungsvorrichtung (13), wobei die zweite Platte (15) gedreht wird;
kontinuierliches Einziehen bis zum vollständigen Einziehen der ersten und zweiten Betätigungsvorrichtung (13), wobei die erste Platte (16) gedreht wird; und
Erreichen der maximalen Kapazität der Betätigungsvorrichtungen, wobei die Halteanordnung (100) befestigt wird.

15. Verfahren nach Anspruch 14, wobei das Verfahren die folgenden Schritte umfasst:
Entfernen des Werkzeugs (10);
Anordnen des Verschleißblechs (200) um die Welle (1) des Brechers herum über der Halteanordnung (100); und
sicheres Anordnen des Verschleißblechs (200) an der Halteanordnung (100).

## Revendications

1. Outil (10) pour un ensemble de retenue (100) d'un concasseur giratoire, l'outil (10) étant destiné à être agencé autour d'un arbre (1) du concasseur au-dessus d'un ensemble de retenue (100) fixant une coque de concassage (2), **caractérisé en ce que** l'outil (10) comprend :
une première plaque (16) étant agencée au-dessus d'une seconde plaque (15) et dans lequel les plaques peuvent tourner l'une par rapport à l'autre, et dans lequel les plaques (16, 15) comprennent un trou traversant centré coïncidant l'une avec l'autre ;
la première plaque (16) présentant une périphérie externe plus petite que la seconde plaque (15) ;
un premier et un second actionneur (13) montés sur la seconde plaque (15) à la périphérie sur des côtés opposés ;
un premier et un second bras de levier (14) montés sur la première plaque (16) et montés en liaison avec le premier et le second actionneur (13), respectivement, et dans lequel les bras de levier (14) comprennent des surfaces de préhension destinées à être agencées autour de l'arbre (1) ;
un premier et un second tourillon mobile (18) montés sur la première plaque (16) en liaison avec le premier et le second bras de levier (14) respectivement ; et
des broches (11) montées sur le côté inférieur (19) de la seconde plaque (15) afin que l'outil (10) soit adapté pour s'ajuster avec l'ensemble de retenue (100).

2. Outil (10) selon la revendication 1, dans lequel l'outil comprend des blocs (12) montés sur le côté inférieur (19) de la seconde plaque (15), répartis uniformément sur un cercle, et sur lesquels blocs (12) les broches (11) sont montées.

3. Outil (10) selon la revendication 1 ou 2, dans lequel l'outil comprend deux broches (11) montées respectivement sur deux blocs (12) différents.

4. Outil (10) selon la revendication 3, dans lequel les deux broches (11) sont montées respectivement sur deux blocs (12) agencés de manière opposée.

5. Outil (10) selon la revendication 1 ou 2, dans lequel l'outil comprend quatre broches (11) montées respectivement sur quatre blocs (12).

6. Outil (10) selon une quelconque revendication précédente, dans lequel les surfaces de préhension des bras de levier (14) comprennent des coussins flexibles (20), et le nombre de coussins par bras de levier est au moins un.

7. Outil (10) selon une quelconque revendication précédente, dans lequel les surfaces de préhension des bras de levier (14) comprennent des coussins flexibles (20) et le nombre de coussins est six sur chaque bras de levier (14).

8. Ensemble de retenue (100) pour fixer une coque de concassage (2) à un concasseur, dans lequel l'ensemble de retenue (100) comprend :
un écrou de tête (110) présentant une première surface qui doit être tournée radialement vers l'intérieur en direction de l'arbre (1) du concasseur et une seconde surface qui doit être tournée radialement vers l'extérieur en direction d'une région supérieure axiale de la coque (2) ;
une bague de support (120) agencée entre l'écrou de tête (110) et l'arbre (1) ;
dans lequel l'écrou de tête (110) comprend des trous (111) sur un côté supérieur,
**caractérisé en ce que** l'ensemble de retenue (100) est adapté pour venir en prise avec l'outil (10) selon une quelconque revendication précédente pour être fixé au concasseur et/ou enlevé de celui-ci, **en ce que** les trous sont agencés et adaptés pour s'ajuster aux broches (11) sur le côté inférieur (19) de la seconde plaque (15) de l'outil (10).

9. Ensemble de retenue (100) selon la revendication 8, dans lequel les trous (111) sont répartis uniformément autour du périmètre du côté supérieur de l'écrou de tête (110).

10. Ensemble de retenue (100) selon l'une quelconque des revendications 8 ou 9, dans lequel les trous (111) sont formés dans des saillies (112) saillantes dans la direction radiale de l'écrou de tête (110) et dans lequel chaque saillie (112) comprend un trou (111).

11. Ensemble de retenue (100) selon l'une quelconque des revendications 8 à 10, dans lequel le nombre de trous (111) est quatre.

12. Ensemble de retenue (100) selon l'une quelconque des revendications 8 à 11, dans lequel l'ensemble de retenue (100) comprend une plaque d'usure (200) solidement agencée adjacente au-dessus de l'écrou de tête (110).

13. Ensemble de retenue (100) selon la revendication 12, dans lequel la plaque d'usure (200) est solidement agencée sur l'écrou de tête (110) au moyen de joints filetés et dans lequel la plaque d'usure (200) comprend en outre des écrous coniques (201) agencés au-dessus des joints et au ras du côté supérieur de la plaque d'usure (200).

14. Procédé d'utilisation d'un outil (10) selon l'une quelconque des revendications 1-7, afin de fixer un ensemble de retenue (100) selon l'une quelconque des revendications 8-13 à une coque de concassage giratoire (2), **caractérisé en ce que** le procédé comprend les étapes suivantes consistant à :
agencer l'outil (10) autour de l'arbre (1) du concasseur au-dessus de l'ensemble de retenue (100), avec les broches (11) montées sur le côté inférieur de l'outil (10) s'ajustant dans les trous de l'ensemble de retenue (111) et avec les surfaces de préhension des bras de levier (14) agencées autour de l'arbre (1) ;
monter le premier et le second tourillon (18) sur la première plaque (16) en liaison avec le premier et le second bras de levier (14), respectivement, dans lequel le tourillon est monté sur le côté du bras de levier (14) opposé à l'actionneur (13) ;
rentrer initialement un premier et un second actionneur (13), dans lequel la seconde plaque (15) est tournée ;
rentrer de manière continue jusqu'à la rentrée complète du premier et du second actionneur (13), dans lequel la première plaque (16) est tournée ; et
atteindre la capacité maximale des actionneurs, dans lequel l'ensemble de retenue (100) est fixé.

15. Procédé selon la revendication 14, dans lequel le procédé comprend les étapes suivantes consistant à :
enlever l'outil (10) ;
agencer la plaque d'usure (200) autour de l'arbre (1) du concasseur au-dessus de l'ensemble de retenue (100) ; et
agencer solidement la plaque d'usure (200) sur l'ensemble de retenue (100).
